# EUROPÄISCHE PATENTANMELDUNG

(11) **EP 0 791 414 A1**
(43) Veröffentlichungstag der Anmeldung: **27.08.1997**
(21) Anmeldenummer: 96110772.9
(22) Anmeldetag: 02.07.1996
(51) Int. Cl.: B21D 35/00

(54) **Stanz- und Formwerkzeug**

(30) Priorität: 26.02.1996 DE 19607198
(71) Anmelder: Karl Marbach GmbH + Co., D-74080 Heilbronn (DE)
(72) Erfinder: Sannwald, Heinz, 74193 Schwaigern (DE)
(74) Vertreter: Hano, Christian, Dipl.-Ing.

(57) **Zusammenfassung**

Die Erfindung betrifft ein Stanz- und Formwerkzeug zur Herstellung von Stanzformteilen aus Bögen oder Folien, die aus durch Überdehnung verformbarem Material bestehen. Das Stanz- und Formwerkzeug umfaßt eine obere Werkzeugträgerplatte (11) und eine Gegenstanzplatte (20), die relativ zueinander bewegbar sind, einen an der Unterseite der Werkzeugträgerplatte (11) angeordneten Ziehstempel (14), einen den Ziehstempel (14) umgebenden Druckring (16), eine zwischen der Werkzeugträgerplatte (11) und dem Druckring (16) angeordnete elastische Einrichtung (18), eine an der Werkzeugträgerplatte (11) angeordnete, sich in Richtung der Gegenstanzplatte (20) erstreckennde, den Druckring (16) umgebende Schneidlinieneinrichtung (22), und eine in der Gegenstanzplatte (20) vorgesehene Aussparung (32), deren Innenumfangsrand unterhalb der Stirnseite des Druckrings (16) angeordnet ist.

## Beschreibung

Die Erfindung betrifft ein Stanz- und Formwerkzeug zur Herstellung von Stanzformteilen aus Bögen oder Folien, die aus einem Material bestehen, das ohne Temperatureinsatz durch Überdehnung verformbar ist.

Das Stanz- und Formwerkzeug kann insbesondere zur Herstellung von Deckein für Marmeladen- und Joghurtbecher verwendet werden, die aus einer Alufolie ausgestanzt werden, die mit Polyethylen oder Polypropylen beschichtet ist.

Solche Deckel werden herkömmlicherweise dadurch hergestellt, daß in einer ersten Arbeitsstation in einem Druckbogen die Verformung vorgenommen wird und in einer zweiten Arbeitsstation die Deckel mittels Stanzmessern an ihrem vollen Umfang aus den Druckbögen ausgestanzt werden.

Es sind somit bei der bekannten Technik wenigstens zwei zeitlich aufeinanderfolgende Arbeitsvorgänge an unterschiedlichen Orten erforderlich. Darüber hinaus werden mit den bekannten Vorrichtungen in einem Arbeitstakt lediglich drei Nutzen ausgestanzt und verformt.

Der Erfindung lag daher die Aufgabe zugrunde, mit konstruktiv einfachen Mitteln ein Stanz- und Formwerkzeug zu schaffen, mit dem sich eine hohe Anzahl von Stanzformteilen gleichzeitig mit hoher Taktzeit herstellen lassen.

Diese Aufgabe wird durch ein Stanz- und Formwerkzeug mit den Merkmalen des Patentanspruchs 1 gelöst. Vorteilhafte Ausgestaltungen des erfindungsgemäßen Stanz- und Formwerkzeugs sind Gegenstand der Patentansprüche 2 bis 3.

Das erfindugsgemäße Stanz- und Formwerkzeug ermöglicht es, Stanzformteile mit hoher Geschwindigkeit und hoher Taktzeit herzustellen. Darüber hinaus kann eine hohe Anzahl von Stanzformteilen gleichzeitig geformt und gestanzt werden, da der Raumbedarf der einzelnen Stanzformeinrichtungen gering ist, so daß eine Vielzahl von Stanzformeinrichtungen an einer Werkzeugträgerplatte angeordnet werden können.

Ausführungsbeispiele der Erfindung werden nachstehend anhand der Zeichnungen näher erläutert. Es zeigt:
- Fig. 1: im Querschnitt eine Stanzformeinrichtung eines Stanz- und Formwerkzeugs in ihrer Ausgangsstellung;
- Fig. 2: die Stanzformeinrichtung von Fig. 1 in einer zwei ten Stellung;
- Fig. 3: die Stanzformeinrichtung von Fig. 1 in ihrer Schneidstellung;
- Fig. 4: die Einzelheit IV von Fig. 3.

Das Stanz- und Formwerkzeug weist eine obere Werkzeugträgerplatte 11 auf, die aus einer oberen Grundplatte 10 und einer unteren Grundplatte 12 aus Aluminium zusammengesetzt ist, die aneinander angrenzen.

Im Abstand zur unteren Grundplatte 12 ist eine Gegenstanzplatte 20 angeordnet.

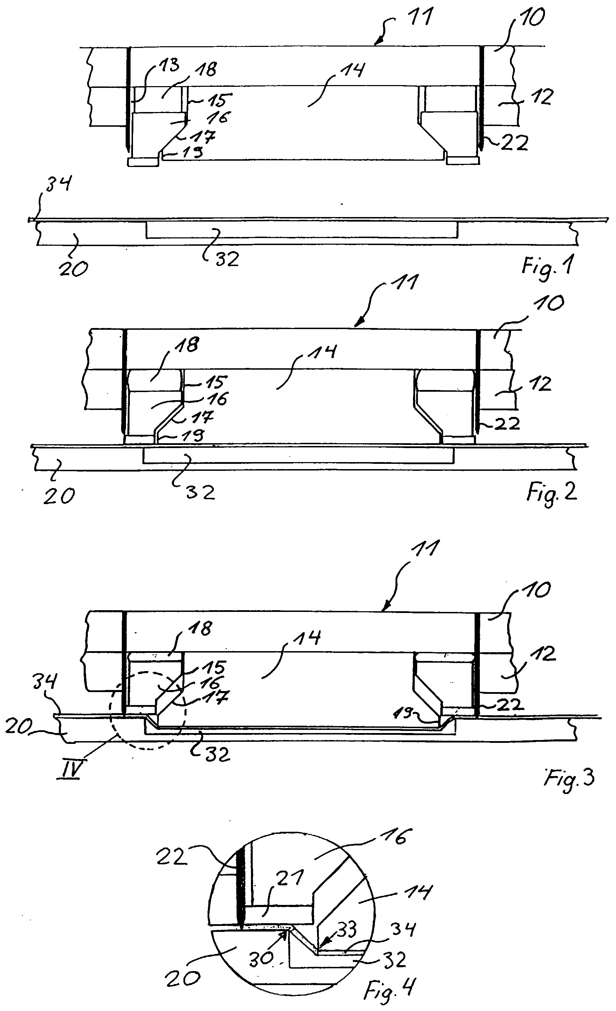

Das Stanz- und Formwerkzeug weist mehrere Stanzformeinrichtungen auf, von denen eine in den Fig. 1 bis 4 gezeigt ist, die zur Herstellung eines Stanzformteils mit kreisförmigen Umfang dient.

In der unteren Grundplatte 12 ist eine zylindrische, vertikal verlaufende Durchgangsöfffnung 13 vorgesehen. Am Innenumfang der Durchgangsöfffnung 13 liegt eine zylindrischen Schneidlinie 22 mit ihrer Außenfläche an, die an der oberen Grundplatte 10 so befestigt ist, daß sie sich senkrecht zur Ebene der Grundplatte 10 nach unten über die untere Grundplatte 12 hinaus erstreckt.

Innerhalb der Durchgangsöffnung 13 ist ein Ziehstempel 14 aus Aluminium konzentrisch an der Unterseite der Grundplatte 10 beispielsweise mittels einer Schraube und Zentrierstiften befestigt. Der Ziehstempel 14 weist einen oberen zylindrischen Abschnitt 15 auf, der mit seiner oberen Stirnseite an der Unterseite der oberen Grundplatte 10 anliegt. Etwa in Höhe der Unterseite der unteren Grundplatte 12 geht der zylindrische Abschnitt 15 in einen sich nach unten konisch erweiternden Abschnitt 17 über, der etwas oberhalb der Schneiden der Schneidlinie 22 endet. An den konischen Abschnitt 17 schließt ein weiterer zylindrischer Abschnitt 19 an, der sich weiter nach unten erstreckt als die Schneiden der Schneidlinien 22 und dessen Durchmesser großer ist als der Durchmesser des zylindrischen Abschnitts 15.

An der Unterseite der oberen Grundplatte 10 ist ein den zylindrischen Abschnitt 15 umgebender elastischer Ring 18 aus Gummi oder Kork konzentrisch in der Durchgangsöffnung 13 angeordnet. An dem elastischen Ring 18 liegt kurz oberhalb des konischen Abschnitts 17 ein Druckring 16 aus Stahl an, der ebenfalls konzentrisch in der Durchgangsöffnung 13 angeordnet ist. Die Innenkontur des Druckrings 16 ist im wesentlichen komplementär zur Außenkontur des Ziehstempels 14 im Bereich zwischen dem unteren Ende des zylindrischen Abschnitts 15 und dem unteren Ende des zylindrischen Abschnitts 19. Die Außenfläche des Druckrings 16 ist zylindrisch.

Am unteren Ende des Druckrings 16 ist konzentrischer Auflagering 21 aus Hartgummi angeordnet, dessen Außendurchmesser etwas geringer ist als der Innendurchmesser der Stanzeinrichtung 22.

Der Auflagering 21 des Druckrings 16 erstreckt sich in der in Fig. 1 gezeigten Ausgangsstellung über die untere Stirnseite des Ziehstempels 14 hinaus nach unten, so daß sich seine Stirnseite unterhalb der Stirnseite des Ziehstempels 14 befindet. Der Höhenunterschied zwischen Auflagering 21 und Ziehstempel 14 wird in Abhängigkeit der Shorehärte des elastischen Rings 18 bestimmt. Der Höhenunterschied zwischen der Schneide der Schneidlinie 22 und der unteren Stirnseite des Ziehstempels 14 wird dahingegen in Abhängigkeit der gewünschten Formtiefe bestimmt.

In der Oberseite der Gegenstanzplatte 20 ist eine zylindrische Aussparung 32 vorgesehen, deren Durchmesser geringer ist als der Außendurchmesser und größer als der Innendurchmesser des Auflagerings 21 des Druckrings 16.

Wenn sich die Stanzeinrichtung in ihrer in Fig. 1 gezeigten Ausgangsstellung befindet, liegt die untere Stirnseite des Ziehstempels 14 oberhalb der oberen Oberfläche der Gegenstanzplatte 20. Zur Herstellung eines gestanzten Formteils wird ein Druckbogen 34, der z.B. aus einer Alufolie besteht, die mit Polyethylen oder Polypropylen beschichtet ist, so in den Zwischenraum zwischen der Gegenstanzplatte 20 und der unteren Grundplatte 12 eingeführt, daß er eben auf der Oberfläche der Gegenstanzplatte 20 aufliegt.

Anschließend wird die obere Werkzeugträgerplatte 11 kontinuierlich nach unten bewegt, wobei zuerst der Auflagering 21 des Druckrings 16 auf den Druckbogen 34 auftrifft und einen Anpreßdruck auf den Druckbogen 34 ausübt.

Bei einer weiteren Fortbewegung der Werkzeugträgerplatte 11 wird der Druckring 16 weiter gegen die Federkraft des elastischen Rings 18 bewegt, so daß dieser eine zunehmende nach unten gerichtete Druckkraft auf den Druckring 16 ausübt, weshalb der Druckbogen 34 zwischen der Oberfläche der Gegenstanzplatte 20 und der unteren Stirnseite des Auflagerings 21 gehalten wird (Fig. 2).

Bei einer anschließenden Fortbewegung der Werkzeugträgerplatte 11 trifft der Ziehstempel 14 auf die Oberfläche des Druckbogens 34 auf. Während sich der Ziehstempel 14 in die Aussparung 32 bewegt, wird das Material des Druckbogens 34 im Bereich zwischen der Kante 30 der Aussparung 32, an der diese in die Oberfläche der Gegenstanzplatte 20 übergeht, und der Außenumfangskante 33 des Ziehstempel 14 überdehnt (Fig. 4). Die Haltekraft des Druckrings 16 mittels des elastischen Rings 18 sollte so ausgelegt sein, daß das Material des Druckbogens 34 nicht in dem Bereich zwischen dem Auflagering 21 des Druckrings 16 und der Gegenstanzplatte 20 wandern kann, so daß ein Nachfliessen verhindert wird. Die Kanten 30 und 33 sind geringfügig abgerundet, um einen Abriß des Druckbogens 34 infolge der Zugkräfte zu vermeiden.

Die Werkzeugträgerplatte 11 wird schließlich so weit nach unten bewegt, bis die Schneide der Schneidlinie 22 auf die Gegenstanzplatte 20 auftrifft und das geformte Teil aus dem Druckbogen 34 ausstanzt (Fig. 3). In dieser Stellung befindet sich die untere Stirnseite des Ziehstempels 14 kurz oberhalb der Bodenfläche der Aussparung 32.

Das Stanzformteil wird so aus dem Druckbogen 34 ausgestanzt, daß es nur noch an wenigen, vorzugsweise zwei Haltepunkten mit dem restlichen Druckbogen 34 verbunden ist. Nach Stanzung des Druckbogens 34 wird die Werkzeughalteplatte 11 wieder in ihre Ausgangsstellung zurückbewegt.

An der Werkzeugträgerplatte 11 können mehrere, zum Beispiel 80 Stanzformeinrichtungen, wie sie in Fig. 1 gezeigt sind, gleichzeitig angebracht werden, so daß es möglich ist, in einem Arbeitstakt 80 Stanzformteile gleichzeitig mit hoher Präzision herzustellen. Die Funktionsweise der Stanzformeinrichtung wurde anhand der Herstellung eines Stanzformteils mit kreisförmigem Außenumfang erläutert. Ein solches Stanzformteil kann beispielsweise ein Deckel für einen Joghurtbecher oder einen Marmeladenbecher sein. Mit derselben Technik ist es jedoch auch möglich, Stanzformteile mit den unterschiedlichsten Außenkonturen herzustellen, wobei die Außenkontur des Ziehstempels 14, die Außen- und Innenkontur des Druckrings 16 und seines Auflagerings 21 und die Form der Schneidlinie 22 in der Regel im wesentlichen parallel zum Außenumfang des herzustellenden Stanzformteils verlaufen.

Bei dem beschriebenen Ausführungsbeispiel wird die Werkstückhalteplatte 11 in Richtung der Gegenstanzplatte 20 bewegt. Es ist jedoch genauso möglich, die Gegenstanzplatte 20 in Richtung der Werkstückhalteplatte 11 zu bewegen.

Darüber hinaus ist es möglich, anstatt der elastischen Einrichtung 18 Druckfedern, z.B. Schraubenfedern zu verwenden, deren oberes Ende in einer Bohrung in der Grundplatte 10 und deren anderes Ende in einer koaxialen Bohrung in dem Druckring 16 aufgenommen ist. Die Druckfedern sind gleichmäßig um den Umfang des Ziehrings verteilt. Die Anzahl der Druckfedern ist abhäng von der erforderlichen Federkraft sowie dem Umfang des Druckrings 16.

## Patentansprüche

1. Stanz- und Formwerkzeug zur Herstellung von Stanzformteilen aus Bögen oder Folien, die aus durch Überdehnung verformbarem Material bestehen, mit
- einer oberen Werkzeugträgerplatte (11) und einer Gegenstanzplatte (20), die relativ zueinander bewegbar sind,
- einem an der Unterseite der Werkzeugträgerplatte (11) angeordneten Ziehstempel (14),
- einem den Ziehstempel (14) umgebenden Druckring (16),
- einer zwischen der Werkzeugträgerplatte (11) und dem Druckring (16) angeordneten elastischen Einrichtung (18),
- einer an der Werkzeugträgerplatte (11) angeordneten, sich in Richtung der Gegenstanzplatte (20) erstreckenden Schneidlinieneinrichtung (22), die den Druckring (16) umgibt, und
- einer in der Gegenstanzplatte (20) vorgesehenen Aussparung (32), deren Innenumfangsrand unterhalb der Stirnseite des Druckrings (16) angeordnet ist,
wobei der Druckring (16), der Ziehstempel (14) und die Schneidlinieneinrichtung (22) so angeordnet sind, daß
- in einer Ausgangstellung der Werkzeugträgerplatte (11)
der Druckring (16) weiter von der Werkzeugträgerplatte (11) vorsteht als der Ziehstempel (14), und der Ziehstempel (14) weiter von der Werkzeugträgerplatte (11) vorsteht als die Schneidlinieneinrichtung und
- in einer Stanzstellung der Werkzeugträgerplatte (11)
der Druckring (16) mittels einer durch die elastische Einrichtung (18) ausgeübten Federkraft auf die Gegenstanzplatte (20) drückt, während die elastische Einrichtung zwischen Druckring (16) und Werkzeugträgerplatte (11) komprimiert ist, die Schneidlinieneinrichtung (22) die Gegenstanzplatte (20) berührt und sich die vordere Stirnseite des Ziehstempels (14) in der Aussparung (32) befindet.

2. Stanz- und Formwerkzeug nach Anspruch 1, dadurch gekennzeichnet, daß die elastische Einrichtung ein Gummiring (18) ist.

3. Stanz- und Formwerkzeug nach Anspruch 1, dadurch gekennzeichnet, daß die elastische Einrichtung von Druckfedern gebildet wird, die sich jeweils mit einem Ende an der Werkstückhalteplatte (11) und dem anderen Ende an dem Druckring (16) abstützen.
